# EUROPÄISCHE PATENTANMELDUNG

(11) **EP 4 818 022 A1**
(43) Veröffentlichungstag der Anmeldung: **07.10.2026**
(21) Anmeldenummer: 26167924.5
(22) Anmeldetag: 26.03.2026
(51) Int. Cl.: B62M 6/55, B62J 45/411, B62M 6/50, B62M 11/00, B62M 11/02

(54) **ANTRIEBSANORDNUNG EINES ELEKTROFAHRRADS**

(30) Priorität: 31.03.2025 DE 102025112508
(71) Anmelder: Robert Bosch GmbH, 70442 Stuttgart (DE)
(72) Erfinder: Binder, Julian, 72827 Wannweil (DE); Senkbeil, Tobias, 72810 Gomaringen (DE); Ossmann, Christoph, 72768 Reutlingen (DE); Engelhardt, Adrian, 72793 Pfullingen (DE); Schickle, Sven, 72070 Tuebingen (DE)

(57) **Zusammenfassung**

Die vorliegende Erfindung betrifft eine Antriebsanordnung (10) eines Elektrofahrrads (100), umfassend eine Kurbelwelle (1), eine Abtriebswelle (2), wobei die Abtriebswelle (2) als Hohlwelle ausgebildet ist, und wobei die Kurbelwelle (1) innerhalb der Abtriebswelle (2) angeordnet ist, ein Lager (3), insbesondere ein Gleitlager, welches zwischen Kurbelwelle (1) und Abtriebswelle (2) angeordnet ist, eine Verzahnung (4), welche die Kurbelwelle (1) und die Abtriebswelle (2) drehmomentübertragend miteinander verbindet, wobei die Kurbelwelle (1) und die Abtriebswelle (2) ausschließlich über das Lager (3) und die Verzahnung (4) mechanisch miteinander verbunden und/oder zueinander abgestützt sind.

## Beschreibung

### Stand der Technik

Die vorliegende Erfindung betrifft eine Antriebsanordnung eines Elektrofahrrads, ein Verfahren zum Betreiben einer Antriebsanordnung eines Elektrofahrrads, und ein Elektrofahrrad.

Bekannt sind Antriebsanordnungen von Elektrofahrrädern, welche ein Motormoment zur Unterstützung einer Tretkraft eines Fahrers des Elektrofahrrads erzeugen. Häufig wird das Motormoment dabei in Abhängigkeit von einem Drehmoment, welches der Fahrer durch seine Tretkraft bewirkt, erzeugt. Zur Erfassung dieses Drehmoments sind Drehmomentsensoren bekannt, beispielsweise welche basierend auf einem magnetoelastischen Prinzip ein Drehmoment an einer Welle erfassen können. Konstruktions- und betriebsbedingt kommen beim Betrieb der Antriebsanordnung häufig verschiedenste Kräfte und Momente vor, welche zum Teil Einfluss auf das gemessene Drehmoment haben und Drehmomentfehler bewirken können.

### Offenbarung der Erfindung

Die erfindungsgemäße Antriebsanordnung mit den Merkmalen des Anspruchs 1 zeichnet sich dadurch aus, dass diese eine besonders einfache und kostengünstige Konstruktion aufweist und eine besonders präzise Ermittlung von Drehmomenten erlaubt. Dies wird erfindungsgemäß erreicht durch eine Antriebsanordnung eines Elektrofahrrads, umfassend eine Kurbelwelle, eine Abtriebswelle, ein Lager, und eine Verzahnung. Die Abtriebswelle ist als eine Hohlwelle ausgebildet, und die Kurbelwelle ist innerhalb der Abtriebswelle angeordnet. Vorzugweise sind Kurbelwelle und Abtriebswelle jeweils koaxial zu einer Kurbelachse angeordnet. Das Lager ist insbesondere ein Gleitlager, bevorzugt ein Gleitlagerring. Das Lager ist dabei, insbesondere radial, zwischen Kurbelwelle und Abtriebswelle angeordnet. Vorzugsweise erlaubt das Lager eine relative Rotation von Kurbelwelle und Abtriebswelle zueinander. Die Verzahnung verbindet die Kurbelwelle und die Abtriebswelle drehmomentübertragend miteinander. Insbesondere bewirkt die Verzahnung dabei eine drehmomentübertragende Verbindung von Abtriebswelle und Kurbelwelle in beide relativen Drehrichtungen. Vorzugsweise erlaubt die Verzahnung in axialer Richtung eine relative Bewegung von Kurbelwelle und Abtriebswelle zueinander. Dabei sind die Kurbelwelle und die Abtriebswelle ausschließlich über das Lager und die Verzahnung mechanisch miteinander verbunden und/oder zueinander abgestützt.

Insbesondere sind die Kurbelwelle und die Abtriebswelle über das Lager und die Verzahnung statisch bestimmt gelagert. Alternativ oder zusätzlich bevorzugt sind die Kurbelwelle und die Abtriebswelle mittels Lager und Verzahnung derart aneinander gelagert, dass diese nicht statisch überbestimmt, insbesondere nicht statisch überbestimmt durch ein weiteres Lager, wie beispielsweise ein weiteres Gleitlager, gelagert sind.

Bevorzugt dient die Verzahnung als ein Lager, insbesondere als ein Zentrierlager, für die Abtriebswelle, insbesondere ausübend eine Drehmomentübertragungs- und Lager- und/oder Positionier- und/oder Zentrierfunktion.

Vorzugsweise sind das Lager und die Verzahnung axial und/oder radial, besonders bevorzugt sowohl axial als auch radial, vollständig innerhalb der Abtriebswelle angeordnet. Insbesondere bilden dabei axial und/oder radial innerhalb die Abtriebswelle die Verzahnung und das Lager die einzigen mechanischen Verbindungspunkte.

Insbesondere wird als mechanisch miteinander verbunden und/oder zueinander abgestützt eine unmittelbare mechanische Verbindung bzw. Abstützung über die beiden Elemente Lager und Verzahnung angesehen. Insbesondere fallen alternative indirekte Verbindungen über weitere Bauteile, wie beispielsweise über Getriebebauteile und/oder Gehäuseteile der Antriebsanordnung nicht unter eine derartige Verbindung und/oder Abstützung.

Insbesondere ist die Kurbelwelle eingerichtet zur drehmomentübertragenden Verbindung mit Kurbeln. Das heißt insbesondere kann der Fahrer des Elektrofahrrads ein Tretmoment unmittelbar an der Kurbelwelle erzeugen mittels Muskelkraft. Bevorzugt ist die Abtriebswelle eingerichtet zur drehmomentübertragenden Verbindung mit einem Abtriebselement, wie beispielsweise einem Kettenblatt. Vorzugsweise ist die Abtriebswelle zudem ausgebildet, dass ein Motormoment von einem Motor an die Abtriebswelle übertragen werden kann. Das heißt, an dem Abtriebselement kann mittels der Abtriebswelle ein summiertes Gesamtmoment aus Tretmoment und Motormoment bereitgestellt werden.

Mit anderen Worten wird eine Antriebsanordnung bereitgestellt, welche eine Kurbelwelle und eine Abtriebswelle aufweist, die nur an genau zwei Stellen zueinander bzw. aneinander gelagert sind, nämlich an dem Lager und an der Verzahnung. Insbesondere wird dabei auf zusätzliche Lagerstellen und/oder Kontaktpunkte zwischen Kurbelwelle und Abtriebswelle verzichtet. Damit wird eine statisch bestimmte Lagerung von Kurbelwelle und Abtriebswelle aneinander ermöglicht. Insbesondere kann eine Überbestimmung bei der Lagerung dieser beiden Wellen vermieden werden. Dadurch ergibt sich der Vorteil, dass eine Drehmomentermittlung, vorzugsweise eines momentanen Tretmoments des Fahrers, besonders präzise ermittelt werden kann. Durch die statisch bestimmte Lagerung kann eine Mechanik der Kraft- und Drehmomentübertragung und dabei insbesondere zusätzlich zu dem reinen Drehmoment wirkende Kräfte und Momente, wie Schubspannungen und Biegekräfte, vollständig modelliert werden, sodass mittels eines mathematischen Models Fehler bei der Drehmomenterfassung, welche durch derartige Einflüsse auftreten können, besonders präzise ermittelt werden. Anhand der dadurch bekannten Drehmomentfehler kann das Drehmoment dann besonders präzise bestimmt werden.

Die Unteransprüche haben bevorzugte Weiterbildungen der Erfindung zum Inhalt.

Bevorzugt ist die Verzahnung als eine Steckverzahnung ausgebildet. Insbesondere ist somit mittels der Verzahnung eine Welle-Nabe-Verbindung zwischen Abtriebswelle und Hohlwelle ausgebildet, welche die Drehmomentübertragung durch formschlüssigen Eingriff bewirkt. Insbesondere wird als Steckverzahnung eine um den Umfang von jeweils Abtriebswelle und Kurbelwelle gleichmäßig ausgebildete Verzahnung angesehen. Besonders bevorzugt ist die Verzahnung selbstzentrierend ausgebildet. Das heißt, durch den Eingriff der Verzahnungsteile jeweils an Abtriebswelle und Hohlwelle ineinander wird, insbesondere bei der Drehmomentübertragung, durch die Verzahnung eine relative Ausrichtung von Kurbelwelle und Abtriebswelle zueinander in radialer Richtung bewirkt. Mit anderen Worten werden mittels der Selbstzentrierung der Verzahnung die Abtriebswelle und die Kurbelwelle koaxial zueinander ausgerichtet, insbesondere innerhalb eines bestimmten Toleranzbereichs. Besonders bevorzugt ist die Verzahnung als eine Kerbverzahnung ausgebildet, insbesondere welche spitz zulaufende gerade Zahnflanken aufweist. Damit kann mittels einer einfachen und robusten Konstruktion mit geringen Lagetoleranzen gleichzeitig die Lagerungsfunktion und Drehmomentübertragung zwischen Kurbelwelle und Abtriebswelle bereitgestellt werden.

Vorzugsweise weist die Abtriebswelle an einem ersten axialen Endbereich eine Abtriebsschnittstelle auf. Das Lager ist dabei näher am ersten Endbereich als die Verzahnung angeordnet. Insbesondere ist das Lager am, bevorzugt innerhalb, des ersten Endbereichs angeordnet. Bevorzugt ist die Verzahnung an, insbesondere innerhalb, einem dem ersten Endbereich abgewandten zweiten axialen Endbereich der Abtriebswelle angeordnet. Als Endbereich wird vorzugsweise jeweils ein Abschnitt der Abtriebswelle angesehen, welcher sich ausgehend von der jeweiligen axialen Stirnseite in axialer Richtung über mindestens 5%, bevorzugt maximal 20%, der axialen Länge der Abtriebswelle erstreckt.

Besonders bevorzugt weist die Abtriebswelle einen Sensierbereich für eine Drehmomenterfassung auf. Der Sensierbereich ist dabei axial zwischen dem Lager und der Verzahnung angeordnet. Insbesondere ist der Sensierbereich axial an die Verzahnung angrenzend angeordnet. Als Sensierbereich wird vorzugsweise ein vorbestimmt aufmagnetisierter Bereich der Abtriebswelle angesehen. Insbesondere kann mittels des Sensierbereichs, und vorzugsweise zusätzlich mittels eines Drehmomentsensors, basierend auf erfassten Änderungen eines Magnetfelds ein momentanes an der Abtriebswelle wirkendes Drehmoment ermittelt werden.

Weiter bevorzugt weist die Abtriebswelle eine Getriebeschnittstelle und/oder eine Freilaufschnittstelle auf. Insbesondere sind Getriebeschnittstelle und/oder Freilaufschnittstelle axial zwischen den beiden Endbereichen der Abtriebswelle angeordnet. Der Sensierbereich ist dabei axial zwischen der Verzahnung und der Getriebeschnittstelle bzw. Freilaufschnittstelle angeordnet. Die Getriebeschnittstelle ist insbesondere eingerichtet zur drehmomentübertragenden Verbindung mit einem Getriebe. Die Freilaufschnittstelle ist vorzugsweise eingerichtet zur drehmomentübertragenden Verbindung mit einem Freilauf. Insbesondere kann über die Getriebeschnittstelle und/oder Freilaufschnittstelle ein Motormoment von einem Motor der Antriebsanordnung an die Abtriebswelle übertragen werden. Dadurch, dass der Sensierbereich zwischen der Verzahnung und der Getriebeschnittstelle bzw. Freilaufschnittstelle angeordnet ist, wird als Drehmoment nur das vom Fahrer über die Kurbelwelle aufgebrachte Tretmoment erfasst, da die Getriebeschnittstelle bzw. Freilaufschnittstelle das Motormoment entlang einem Momentenübertragungspfad an der Abtriebswelle erst nach dem Sensierbereich in die Abtriebswelle einleitet.

Bevorzugt umfasst die Antriebsanordnung ferner ein erstes Gehäuselager, welches an der Kurbelwelle angeordnet ist, und ein zweites Gehäuselager, welches an der Abtriebswelle angeordnet ist. Insbesondere sind die Gehäuselager eingerichtet zur relativ drehbaren Lagerung der Wellen zu einem Gehäuse der Antriebsanordnung. Das Lager ist dabei radial innerhalb und/oder axial überlappend zum zweiten Gehäuselager angeordnet. Bevorzugt ist das erste Gehäuselager axial neben, insbesondere außerhalb, der Verzahnung angeordnet. Damit kann eine robuste und zuverlässige Lagerung bei einfacher und kompakter Konstruktion und Geometrie der Antriebsanordnung ermöglicht werden.

Besonders bevorzugt umfasst die Antriebsanordnung ferner einen Drehmomentsensor, welcher eingerichtet ist zur Ermittlung eines Drehmoments basierend auf einer Verformung des Sensierbereichs. Insbesondere ist der Drehmomentsensor eingerichtet, um Magnetfeldänderungen im Bereich des magnetischen Sensierbereichs zu erfassen. Insbesondere kann basierend darauf eine mechanische Verformung des Sensierbereichs in Form einer Torsion ermittelt werden. Basierend darauf kann das momentane Drehmoment an der Abtriebswelle im Bereich des Sensierbereichs bestimmt werden.

Bevorzugt umfasst die Antriebsanordnung ferner einen Motor, welcher insbesondere ein Elektromotor ist. Der Drehmomentsensor ist dabei auf einer dem Motor abgewandten Seite der Abtriebswelle angeordnet. Das heißt, die Abtriebswelle befindet sich, insbesondere bezüglich einer radialen Richtung der Abtriebswelle, genau zwischen dem Motor und dem Drehmomentsensor. Dadurch kann auf besonders einfache Weise eine Abschirmung des Drehmomentsensors gegenüber störenden Einflüssen des Motors ermöglicht werden. Das heißt, beispielsweise am Motor durch dessen Betrieb erzeugte elektromagnetische Felder werden von der Abtriebswelle und/oder Kurbelwelle zumindest teilweise gegenüber dem Drehmomentsensor abgeschirmt. Dadurch können Störungen am Drehmomentsensor minimiert werden und das Drehmoment kann besonders präzise bestimmt werden.

Weiterhin führt die Erfindung zu einem Verfahren zum Betreiben einer Antriebsanordnung, bevorzugt der oben beschriebenen Antriebsanordnung. Die Antriebsanordnung umfasst dabei eine Kurbelwelle und eine Abtriebswelle und ein Lager zwischen der Kurbelwelle und der Abtriebswelle sowie eine Verzahnung, welche die Kurbelwelle und die Abtriebswelle drehmomentübertragend miteinander verbindet. Das Verfahren umfasst dabei die Schritte:
- Erfassen eines Drehmoments an der Abtriebswelle mittels eines Drehmomentsensors,
- Berechnen eines Drehmomentfehlers basierend auf dem erfassten Drehmoment und basierend auf zumindest einer Eingangsgröße mittels eines, insbesondere mathematischen, Kompensationsmodells, und
- Ermitteln eines korrigierten Drehmoments basierend auf dem erfassten Drehmoment und dem berechneten Drehmomentfehler.

Vorzugsweise erfolgt das Erfassen des Drehmoments an der Abtriebswelle mittels eines Sensierbereichs an der Abtriebswelle, welcher insbesondere einem aufmagnetisierten Abschnitt der Abtriebswelle entspricht und mittels eines Sensorelements, welches Änderungen eines Magnetfeldes im Bereich des Sensierbereichs erfassen kann. Vorzugsweise basiert der Drehmomentsensor somit auf dem magnetoelastischen Prinzip.

Als Kompensationsmodell wird insbesondere ein mathematisches Modell angesehen, welches insbesondere einen mathematischen Zusammenhang zwischen zumindest einer Eingangsgröße und dem Drehmomentfehler als Ausgang beschreibt. Das Kompensationsmodell ist insbesondere ein vorbekanntes Modell, welches auf den vorbekannten mechanischen Eigenschaften der Antriebsanordnung basiert. Das heißt, das Kompensationsmodell ist vorzugsweise empirisch und/oder analytisch bestimmt.

Bevorzugt basiert das Kompensationsmodell auf den Annahmen, dass resultierende mechanische Schubspannungen auf der Abtriebswelle, insbesondere im Sensierbereich, proportional zu den eingebrachten Kräften sind. Als eingebrachte Kräfte werden dabei insbesondere eine Getriebekraft, welche aus einem Motormoment resultiert, und eine Kettenkraft, welche aus einer Abtriebskraft der Antriebsanordnung an einem Kettenblatt resultiert angesehen. Vorzugsweise wird dabei der Drehmomentfehler, der bei der Messung mittels des Drehmomentsensors auftreten kann, als proportional zu der Schubspannung angenommen.

Besonders bevorzugt ist das Modell anhand mehrerer Entwicklungsmuster der Antriebsanordnung ermittelt. Dabei ist das Kompensationsmodell vorzugsweise dadurch ermittelt, dass eine Variation aller Parameter in einem jeweils festgelegten Wertebereich erfolgt, so dass ein größtmöglicher Parameterraum vollständig abgedeckt ist. Das heißt, beispielsweise kann das Kompensationsmodell teilweise basierend auf einem experimentellen Vermessen von einer oder mehreren Antriebsanordnungen an einem Prüfstand aufgestellt werden.

Mit anderen Worten wird bei dem Verfahren ein Drehmoment an der Abtriebswelle der Antriebsanordnung sensorbasiert erfasst. Anhand dieses erfassten Drehmoments wird mittels des mathematischen Kompensationsmodells anschließend ein Drehmomentfehler, welcher insbesondere einer abgeschätzten statistischen Abweichung des erfassten Drehmoments von einem tatsächlichen Drehmoment entspricht, berechnet. Mittels des berechneten Drehmomentfehlers wird anschließend ein korrigiertes Drehmoment anhand des erfassten Drehmoments ermittelt. Das korrigierte Drehmoment liegt damit besonders nahe an dem tatsächlichen an der Abtriebswelle am Sensierbereich anliegenden Drehmoment. Somit kann mittels des Verfahrens eine besonders genaue Drehmomentbestimmung an der Abtriebswelle ermöglicht werden.

Besonders bevorzugt sind die Abtriebswelle und die Kurbelwelle ausschließlich über das Lager und die Verzahnung mechanisch miteinander verbunden und/oder zueinander abgestützt. Alternativ oder zusätzlich bevorzugt sind die Kurbelwelle und die Abtriebswelle statisch bestimmt, mit anderen Worten insbesondere nicht statisch überbestimmt, mechanisch miteinander verbunden und/oder zueinander abgestützt. Besonders bevorzugt übernimmt die Verzahnung dabei eine Lagerfunktion von Abtriebswelle und Kurbelwelle zueinander. Durch die statisch bestimmte Lagerung von Abtriebswelle und Kurbelwelle aneinander kann ermöglicht werden, dass das Kompensationsmodell vollständig aus bekannten und/oder bestimmbaren Größen bereitgestellt werden kann, da sämtliche mechanischen Einflüsse von Kräften und Momenten beim Betrieb der Antriebsanordnung auf den Sensierbereich bekannt und/oder eindeutig bestimmbar sind. Somit kann eine Berechnung des Drehmomentfehlers und damit des korrigierten Drehmoments auf einfache und besonders präzise Weise erfolgen.

Bevorzugt werden als Eingangsgrößen einer oder mehrere der folgenden Parameter verwendet:
- Motormoment,
- Kettenblatt-Größe, insbesondere Kettenblatt-Zähnezahl,
- Kettenlinie,
- Antriebsanordnung-Montagewinkel,
- globaler Ketteneingriffswinkel,
- Gang-abhängiger Ketteneingriffswinkel.

Das Motormoment entspricht insbesondere einem von einem Elektromotor bereitgestellten Motormoment zur Unterstützung der Tretkraft des Fahrers. Als Kettenblatt-Größe kann insbesondere ein Durchmesser und/oder Radius des momentan im Eingriff befindlichen Kettenblatts verwendet werden. Vorteilhafterweise kann die Kettenblatt-Größe in Form einer Kettenblatt-Zähnezahl des Kettenblatts verwendet werden. Damit kann ein radialer Hebelarm, über welchen eine Kettenkraft, die am Kettenblatt wirkt, abgebildet werden.

Als Kettenlinie wird insbesondere in axialer Abstand der Fahrradkette zu einer vordefinierten Fahrrad-Mittelebene angesehen. Damit kann der axiale Einfluss der Kettenkraft berücksichtigt werden.

Als Antriebsanordnung-Montagewinkel wird insbesondere ein Einbauwinkel der Antriebsanordnung bezüglich einer Drehung um die Abtriebsachse angesehen. Beispielsweise kann der Antriebsanordnung-Montagewinkel einer Drehung einer vorbestimmten Radialrichtung der Abtriebsachse relativ zu einem vorbestimmten Referenz-Montagewinkel angesehen werden.

Als globaler Ketteneingriffswinkel wird insbesondere ein Eingriffswinkel der Fahrradkette relativ zu einer Referenz-Geraden, welche beispielsweise einer Horizontalen entsprechen kann, angesehen. Insbesondere definiert der globale Ketteneingriffswinkel eine Richtung der wirkenden Kettenkraft.

Als Gang-abhängiger Ketteneingriffswinkel wird insbesondere analog dem globalen Ketteneingriffswinkel ein momentaner Eingriffswinkel der Fahrradkette angesehen, welcher zusätzlich ein momentanes Gangverhältnis berücksichtigt. Das heißt, die Veränderlichkeit des Ketteneingriffswinkels zusätzlich basierend auf unterschiedlich großen Ritzeln der Gangschaltung des Elektrofahrrads wird zusätzlich berücksichtigt.

Damit können mittels vorbekannter und/oder eindeutig bestimmbarer Parameter eine zuverlässige und präzise Berechnung des Drehmomentfehlers mittels des Kompensationsmodells und damit eine besonders genaue Bestimmung des momentanen Drehmoments an der Abtriebswelle ermöglicht werden.

Bevorzugt erfolgt zusätzlich eine Berücksichtigung eines Schräglauf-Winkels der Fahrradkette, welcher insbesondere einem Winkel zwischen der Fahrradkette und einer Radialrichtung der Abtriebsachse entspricht. Beispielsweise kann der Schräglaufwinkel basierend auf einem erfassten und/oder erkannten momentanen Gang der Gangschaltung des Elektrofahrrads, und insbesondere zusätzlich basierend auf vorbekannten geometrischen Eigenschaften der Gangschaltung, ermittelt werden. Vorzugsweise wird der Schräglauf-Winkel als Teil des globalen Ketteneingriffswinkels und/oder des Gang-abhängiger Ketteneingriffswinkels berücksichtigt.

Besonders bevorzugt werden die zumindest eine Eingangsgröße, insbesondere sämtliche Eingangsgrößen, sensorbasiert ermittelt und/oder abgeschätzt und/oder sind vorkonfiguriert.

Vorzugsweise wird zumindest einer der folgenden Parameter sensorbasiert ermittelt:
- erfasstes Drehmoment,
- Motormoment,
- Antriebsanordnung-Montagewinkel.

Insbesondere wird das erfasste Drehmoment dabei mittels des Drehmomentsensors und mittels des oben beschriebenen Schritts des Verfahrens erfasst. Das Motormoment wird vorzugsweise basierend auf einem Betätigungsstrom des Motors, welcher insbesondere mittels eines Stromsensors erfasst werden kann, ermittelt. Bevorzugt kann der Antriebsanordnung-Montagewinkel basierend auf Sensordaten einer Inertialsensorik und einer vorbekannten Einbaulage der Inertialsensorik innerhalb der Antriebsanordnung ermittelt werden.

Alternativ oder zusätzlich bevorzugt wird zumindest einer der folgenden Parameter, insbesondere basierend auf sensorbasiert erfassten Größen, abgeschätzt:
- Kettenblattgröße, insbesondere Kettenblatt-Zähnezahl,
- Kettenlinie,
- Gang-abhängiger Ketteneingriffswinkel.

Insbesondere kann zumindest einer oder jeder der genannten Parameter basierend auf einer Gangerkennung und vorzugsweise zusätzlich basierend auf vorbekannten geometrischen und/oder mechanischen Eigenschaften der Antriebsanordnung abgeschätzt werden. Die Gangerkennung erfolgt vorzugsweise softwarebasiert und basierend auf dem erfassten Drehmoment und/oder einer erfassten Trittfrequenz.

Weiter alternativ oder zusätzlich bevorzugt ist zumindest einer der folgenden Parameter vorkonfiguriert:
- Kettenblatt-Größe, insbesondere Kettenblatt-Zähnezahl,
- Kettenlinie,
- globaler Ketteneingriffswinkel.

Als vorkonfiguriert wird insbesondere angesehen, dass ein vorbekannter Wert für den jeweiligen Parameter gespeichert ist. Beispielsweise kann dieser Wert bei einer Inbetriebnahme der Antriebsanordnung manuell durch einen Nutzer eingegeben werden.

Besonders bevorzugt umfasst das Kompensationsmodell die folgende lineare Modellgleichung: $F = {X}_{1} + {X}_{2} {M}_{Motor} + {X}_{3} {M}_{Sum} \frac{1}{Z} \frac{b}{a} sin \left({α}_{E}\right) + {X}_{4} {M}_{Sum} \frac{1}{Z} \frac{b}{a} cos \left({α}_{E}\right) ,$ mit dem Drehmomentfehler F, dem Motormoment *M_{Motor}*, einem Gesamtmoment *M_{Sum}*, der Kettenblatt-Zähnezahl Z, einem axialen Abstand b des zweiten Gehäuselagers und der Kettenlinie bzw. dem Kettenblatt, einem axialen Lagerabstand a von Lager und Verzahnung, dem Antriebsanordnung-Montagewinkel *α_{E}*, und den Konstanten *X*₁ und *X*₂ und *X*₃ und *X*₄.

Das Gesamtmoment entspricht vorzugsweise einer Summe aus dem Motormoment und einem Tretmoment, wobei das Tretmoment dem erfassten Motormoment, welches mittels des ersten Schritts des Verfahrens erfasst wird, entspricht.

Das heißt, das Kompensationsmodell umfasst eine einfach zu lösende lineare Gleichung mit mehreren Parametern und mehreren Konstanten. Damit kann der Drehmomentfehler und damit das korrigierte Drehmoment auf besonders einfache und effiziente Weise bestimmt werden.

Bevorzugt werden die Konstanten X1 und X2 und X3 und X4 empirisch basierend auf mindestens einer Muster-Antriebsanordnung, insbesondere zur Minimierung des Drehmomentfehlers, vorzugsweise mittels eines Regressionsverfahrens, an die Modellgleichung angepasst. Mit anderen Worten werden die Konstanten dadurch bestimmt, dass mittels der mindestens einen Muster-Antriebsanordnung die erforderlichen Betriebsparameter und geometrischen Parameter experimentell während einer Betätigung der Muster-Antriebsanordnung mittels vorbekannten Betätigungskräften- und/oder - Momenten erfolgt, gemessen. Insbesondere werden die Konstanten dabei derart bestimmt, dass diese anhand der Modellgleichung mittels eines Regressionsverfahrens an die erfassbaren Werte angepasst werden. Insbesondere werden die Konstanten anschließend gespeichert für die Verwendung des Verfahrens beim Betrieb der Antriebsanordnung. Damit kann eine besonders einfache und präzise Abschätzung des Drehmomentfehlers erfolgen.

Bevorzugt umfasst die Antriebsanordnung ferner einen Motor, wobei das Verfahren ferner den Schritt umfasst: Erzeugen eines Motormoments mittels des Motors in Abhängigkeit des ermittelten korrigierten Drehmoments. Insbesondere wird das Motormoment dabei zur Unterstützung des Tretmoments des Fahrers beim Betreiben eines Elektrofahrrads erzeugt. Durch die Verwendung des korrigierten Drehmoments, welches mittels des Verfahrens wie oben beschrieben besonders präzise das tatsächlich erzeugte Tretmoment abschätzt, kann damit ein besonders präziser und feinfühliger Betrieb der Antriebsanordnung ermöglicht werden. Besonders vorteilhaft kann dabei beispielsweise eine Anfahrschwelle, welche beispielsweise einem minimalen notwendigen Drehmoment, welches der Fahrer erzeugen muss, sodass die Motorunterstützung einsetzt, geringgehalten werden, um ein feinfühliges Ansprechen der Motorunterstützung bereitstellen zu können.

Weiterhin führt die Erfindung zu einem Elektrofahrrad, umfassend die beschriebene Antriebsanordnung. Alternativ oder zusätzlich bevorzugt ist das Elektrofahrrad eingerichtet zur Durchführung des beschriebenen Verfahrens. Insbesondere umfasst das Elektrofahrrad dabei eine Steuereinheit, welche eingerichtet ist, um das Verfahren durchzuführen.

### Kurze Beschreibung der Zeichnungen

Nachfolgend wird ein Ausführungsbeispiel der Erfindung unter Bezugnahme auf die begleitenden Zeichnungen im Detail beschrieben. In der Zeichnung ist:
- Figur 1: eine vereinfachte schematische Ansicht eines Elektrofahrrads mit einer Antriebsanordnung gemäß einem bevorzugten Ausführungsbeispiel, bei der ein erfindungsgemäßes Verfahren durchgeführt wird,
- Figur 2: eine stark vereinfachte schematische Detailansicht der Antriebsanordnung des bevorzugten Ausführungsbeispiels,
- Figur 3: eine stark vereinfachte schematische Ansicht von einem Lagerungskonzept der Antriebsanordnung des bevorzugten Ausführungsbeispiels,
- Figur 4: eine Detailansicht einer Verzahnung der Antriebsanordnung des bevorzugten Ausführungsbeispiels,
- Figur 5: ein vergrößertes Detail der Figur 4,
- Figur 6: eine stark vereinfachte Schnittansicht der Antriebsanordnung des vereinfachten Ausführungsbeispiels,
- Figur 7: eine stark vereinfachte schematische Ansicht des erfindungsgemäßen Verfahrens, und
- Figur 8: eine vereinfachte schematische Ansicht von Signalverläufen bei der Durchführung des erfindungsgemäßen Verfahrens.

### Ausführungsformen der Erfindung

Bevorzugt sind alle gleichen Bauteile, Elemente und/oder Einheiten in allen Figuren mit den gleichen Bezugszeichen versehen.

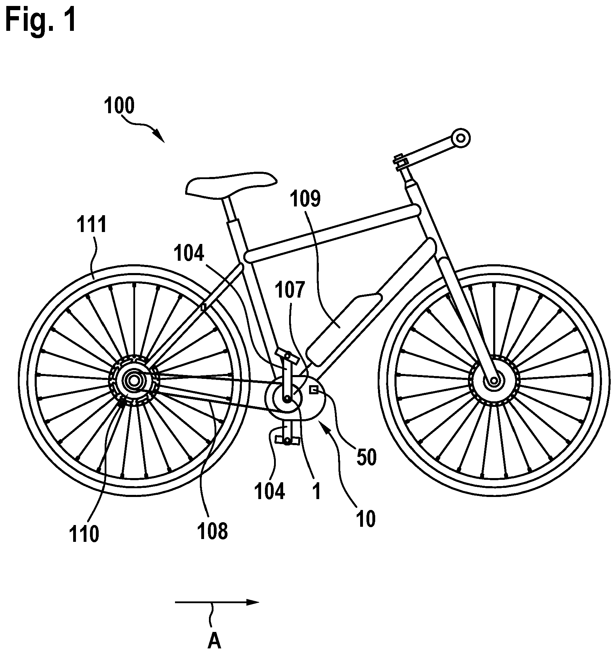

Figur 1 zeigt eine vereinfachte schematische Ansicht eines Elektrofahrrads 100, welches eine Antriebsanordnung 10 gemäß einem bevorzugten Ausführungsbeispiel der Erfindung umfasst. Das Elektrofahrrad 100 ist zudem eingerichtet zur Durchführung eines erfindungsgemäßen Verfahrens 30 zum Betreiben der Antriebsanordnung 10.

Die Antriebsanordnung 10 umfasst einen Motor 20, der insbesondere in Elektromotor ist. Der Motor 20 kann mittels eines elektrischen Energiespeichers 109 des Elektrofahrrads 100 mit elektrischer Energie versorgt werden. Die Antriebsanordnung 10 ist als ein Mittelmotor des Elektrofahrrads 100 ausgebildet, das heißt im Bereich einer Tretlageranordung angeordnet.

Durch ein mittels des Motors 20 erzeugten Motormoments kann eine durch Muskelkraft erzeugte Tretkraft eines Fahrers des Elektrofahrrads 100 motorisch unterstützt werden. Die Muskelkraft des Fahrers kann dabei über einen Kurbeltrieb mit Kurbeln 104 aufgebracht werden.

Die Antriebsanordnung 10 umfasst eine Steuereinheit 50, welche eingerichtet ist, um den Motor 20 gesteuert zu betätigen. Beispielsweise kann die Steuereinheit 50 einen elektrischen Betätigungsstrom zum Betätigen des Motors 20 steuern. Zudem ist die Steuereinheit 50 eingerichtet, um das erfindungsgemäße Verfahren 30 durchzuführen.

Bei dem Verfahren 30 erfolgt ein Betätigen des Motors 20 in Abhängigkeit eines von dem Fahrer des Elektrofahrrads 100 durch dessen Muskelkraft erzeugten Tretmoments. Das Tretmoment wird dabei mittels eines Drehmomentsensors 40 und eines Sensierbereichs 23 ermittelt.

Die erfindungsgemäße Antriebsanordnung 10 und das erfindungsgemäße Verfahren 30 sind dabei speziell so ausgestaltet, dass eine Erfassung des Tretmoments des Fahrers mit besonders hoher Genauigkeit erfolgen kann. Die Konstruktion der Antriebsanordnung 10 sowie die Ausgestaltung des Verfahrens 30 werden nachfolgend im Detail beschrieben.

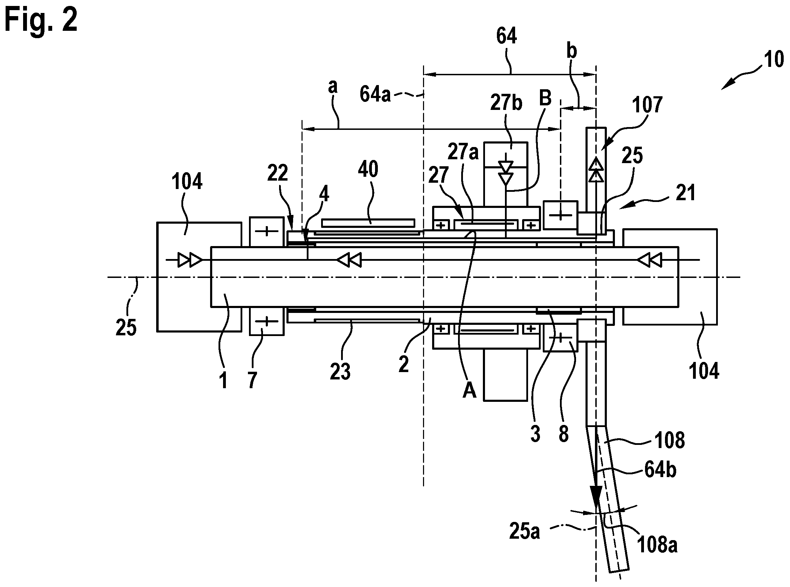

Die Antriebsanordnung 10 ist in vereinfachter schematischer Detailansicht in Figur 2 dargestellt.

Die Antriebsanordnung 10 umfasst eine Kurbelwelle 1, welche drehfest mit den Kurbeln 104 verbunden ist.

Zudem umfasst die Antriebsanordnung 10 eine Abtriebswelle 2. Die Abtriebswelle 2 ist als Hohlwelle ausgebildet, und die Kurbelwelle 1 ist im Inneren der Abtriebswelle 2 angeordnet und durchragt die Abtriebswelle 2 vollständig.

Die Abtriebswelle 2 weist eine gemeinsame Getriebeschnittstelle und Freilaufschnittstelle 27 auf, mittels welcher über einen Freilauf 27a ein Zahnrad 27b eines Getriebes drehfest verbunden werden kann. Über das (nicht näher dargestellte) Getriebe kann das vom Motor 20 erzeugte Motormoment über das Zahnrad 27b bei geschlossenem Freilauf 27a an die Abtriebswelle 2 übertragen werden. Die Abtriebswelle 2 weist an einem ersten axialen Endbereich 21, welcher sich ausgehend von der in Figur 2 rechts, das heißt abtriebs-seitigen, Stirnseite der Abtriebswelle 2 über maximal 20% der axialen Länge der Abtriebswelle 2 erstreckt, eine Abtriebsschnittstelle 25 auf. Die Abtriebsschnittstelle 25 ist eingerichtet zur drehfesten Verbindung eines Kettenblatts 107.

Über das Kettenblatt 107 kann eine Fahrradkette 108 angetrieben werden, mittels welcher das Antriebsmoment an eine Hinterradnabe 110 (vgl. Figur 1) und damit an das Hinterrad 111 des Elektrofahrrads 100 übertragen werden. Vorzugsweise ist an der Hinterradnabe 110 ein Ritzelpaket mit mehreren Ritzeln (nicht dargestellt) vorgesehen.

In axialer Richtung zwischen der Abtriebsschnittstelle 25 und der Getriebeschnittstelle und Freilaufschnittstelle 27 ist ein zweites Gehäuselager 8 angeordnet, mittels welchem die Abtriebswelle 2 relativ zu einem Gehäuse (nicht dargestellt) der Antriebsanordnung 10 gelagert ist.

Ferner umfasst die Antriebsanordnung 10 ein erstes Gehäuselager 7, welches an einem Außenumfang der Kurbelwelle 1 angeordnet ist, und damit die Kurbelwelle 1 relativ zu dem Gehäuse lagert. Das erste Gehäuselager 7 ist abtriebsabgewandt axial an die Stirnseite der Abtriebswelle 2 angrenzend angeordnet.

Das Gehäuse ist insbesondere ortsfest am Elektrofahrrad 100 befestigt, beispielsweise mittels einer Verschraubung an einem Fahrradrahmen des Elektrofahrrads 100 fixiert.

Das erste Gehäuselager 7 und das zweite Gehäuselager 8 sind vorzugsweise als Wälzlager ausgebildet.

Weiterhin umfasst die Antriebsanordnung 10 ein Lager 3, welches insbesondere als ein Gleitlager ausgebildet ist, und welches radial zwischen der Kurbelwelle 1 und der Abtriebswelle 2 angeordnet ist. Das Lager 2 ist dabei radial innerhalb des zweiten Gehäuselagers 8 angeordnet, und axial mittig zwischen der Abtriebsschnittstelle 25 und der Gehäuseschnittstelle und Freilaufschnittstelle 27.

Zudem weist die Antriebsanordnung 10 eine Verzahnung 4 auf, welche die Kurbelwelle 1 und die Abtriebswelle 2 drehmomentübertragend miteinander verbindet. Die Verzahnung 4 ist dabei unmittelbar an die abtriebs-abgewandte Stirnseite der Abtriebswelle 2 angrenzend angeordnet.

Die Abtriebswelle 2 weist einen Sensierbereich 23 auf, welcher durch einen vorbestimmt aufmagnetisierten außenumfangsseitigen Teilbereich der Abtriebswelle 2 ausgebildet ist. Der Sensierbereich 23 ist dabei in axialer Richtung zwischen der Verzahnung 4 und der Getriebeschnittstelle und Freilaufschnittstelle 27 angeordnet. Insbesondere erstreckt sich der Sensierbereich 23 über mindestens 25% der axialen Länge der Abtriebswelle 2.

Die Verzahnung 4 bietet dabei die einzige drehmomentübertragende Verbindung von Kurbelwelle 1 und Abtriebswelle 2. Damit wird das gesamte mittels der Kurbeln 104 an der Kurbelwelle 1 wirkende Tretmoment über die Verzahnung 4 am zweiten Endbereich 22 an die Abtriebswelle 2 übertragen. Insbesondere erstreckt sich der zweite axiale Endbereich 22 dabei ausgehend von der abtriebs-abgewandten Stirnseite der Abtriebswelle 2 über maximal 20% der axialen Länge der Abtriebswelle 2.

Der Tretmomentverlauf A ist in Figur 2 vereinfacht schematisch gekennzeichnet. Auch gekennzeichnet ist der Motormomentverlauf B, welcher über das Zahnrad 27b bezüglich einer Richtung, welche einer Abtriebsrichtung zum Kettenblatt 107 hin entspricht, erst nach dem Sensorbereich 23 auf die Abtriebswelle 2 übertragen wird.

Bei einem aufgebrachten Tretmoment kann somit mittels eines Drehmomentsensors 40, welcher auf dem magnetoelastischen Prinzip basiert, eine durch das Tretmoment bewirkte Torsion der Abtriebswelle 2 innerhalb des Sensierbereichs 23 basierend auf einer Erfassung von Magnetfeldänderungen durch den Sensierbereich 23 erfasst werden.

Die Antriebsanordnung 10 ist dabei speziell derart ausgestaltet, dass die Kurbelwelle 1 und die Abtriebswelle 2 ausschließlich über das Lager 3 und die Verzahnung 4 mechanisch miteinander verbunden und aneinander abgestützt sind. Das heißt, zwischen Kurbelwelle 1 und Abtriebswelle 2 gibt es bis auf Lager 3 und Verzahnung 4 keinerlei weitere Elemente oder Bereiche, die eine Kraftübertragung oder einen unmittelbaren oder mittelbaren Kontakt erlauben. Insbesondere werden dabei nur mechanische Kontakte oder Verbindungen oder dergleichen radial und axial innerhalb der Abtriebswelle betrachtet. Eventuelle weitere mechanische Pfade, beispielsweise über Getriebe und Gehäuse und Gehäuselager 7, 8 oder dergleichen werden dabei nicht als die mechanische Verbindung und/oder Abstützung zwischen Kurbelwelle 1 und Abtriebswelle 2 angesehen.

Das Lager 3 erlaubt dabei eine direkte radiale Abstützung und relative Positionierung von Kurbelwelle 1 und Abtriebswelle 2 zueinander, dadurch, dass dieses als Gleitlagerring ausgebildet ist.

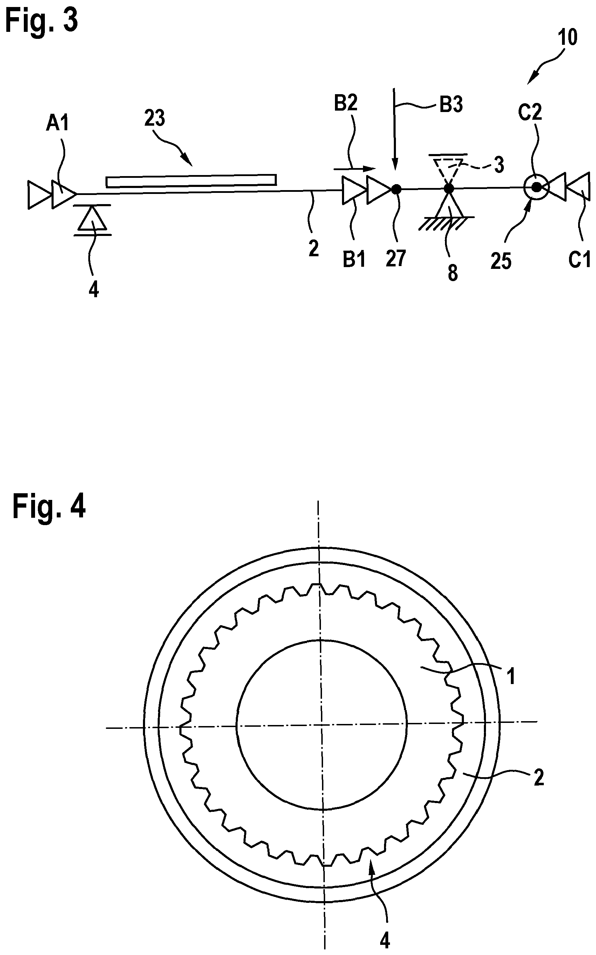

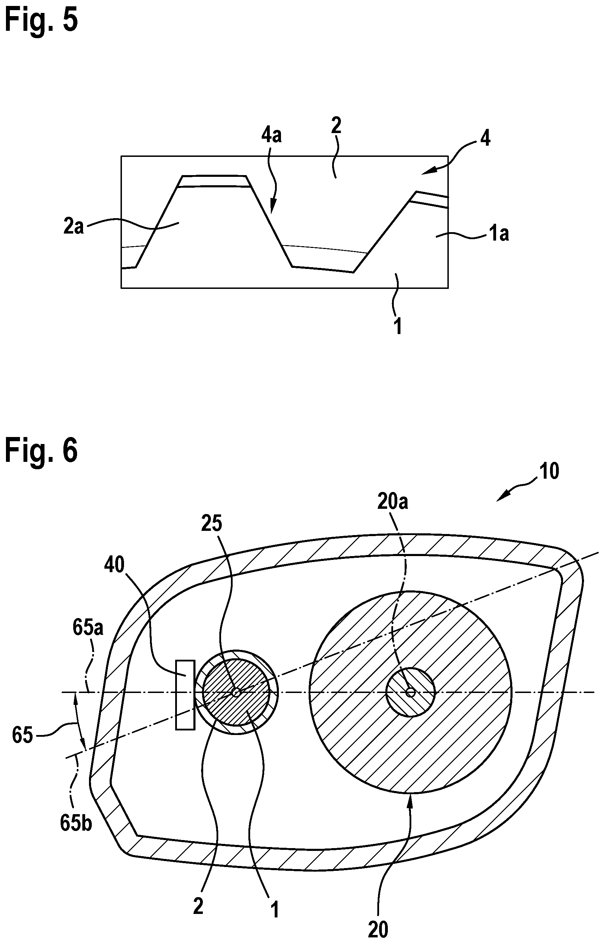

Die Verzahnung 4 ist als eine selbstzentrierende Steckverzahnung, insbesondere als eine Kerbverzahnung, ausgebildet, welche detaillierter in den Figuren 4 und 5 dargestellt ist. Die Verzahnung 4 ist dabei um den gesamten Umfang von Kurbelwelle 1 und Abtriebswelle 2 gleichmäßig ausgebildet. Die Verzahnung 4 weist dabei an Kurbelwelle 1 und Abtriebswelle 2 jeweils Zähne 1a, 2a auf, welche ineinander greifen. Zahnflanken der Zähne 1a, 2a sind dabei jeweils gerade ausgebildet und erstrecken sich schräg zu einer Radialrichtung. Die Zähne 1, 2 sind damit spitz zulaufend ausgebildet, wobei die Spitze jeweils abgeflacht ist.

Die Verzahnung 4 bietet damit neben der Funktion der Drehmomentübertragung, insbesondere bei entsprechend gewählten Fertigungstoleranzen, zusätzlich eine Lagerungsfunktion von Abtriebswelle 2 und Kurbelwelle 1 relativ zueinander im Hinblick auf eine Koaxialität der beiden Wellen.

Dadurch, dass die Kurbelwelle 1 und die Abtriebswelle 2 ausschließlich an den beiden Stellen, wo sich das Lager 3 bzw. die Verzahnung 4 befindet, mechanisch miteinander verbunden sind, ergibt sich der Vorteil einer statisch bestimmten Mechanik der Antriebsanordnung 10. Dadurch können alle mechanischen Einflüsse, welche beim Betrieb der Antriebsanordnung 10 auf den Sensierbereich 23 einwirken, eindeutig mittels mechanischer Zusammenhänge beschrieben werden. Damit kann eine Ermittlung des Drehmoments am Sensierbereich 23, und damit das momentane Tretmoment des Fahrers, besonders genau bestimmt werden.

Figur 3 zeigt eine stark vereinfachte schematische Ansicht eines Details der Antriebsanordnung 10, welches die an der Abtriebswelle 2 wirkenden Kräfte und Momente beschreibt.

Am linken Ende in Figur 2 befindet sich die Verzahnung 4, welche aufgrund einer axial möglichen Beweglichkeit von Kurbelwelle 1 und Abtriebswelle 2 zueinander als ein Loslager wirkt. Über die Verzahnung 4 wird dabei das Tretmoment A1 auf die Abtriebswelle 2 übertragen.

Axial angrenzend befindet sich der Sensorbereich 23 zwischen der Verzahnung 4 und der Getriebeschnittstelle und Freilaufschnittstelle 27. An dieser wird das Motormoment B1 zusätzlich auf die Abtriebswelle 2 übertragen. Zusätzlich wirken eine axiale Verzahnungskraft B2 und eine radiale Verzahnungskraft B3, welche aus der Getriebeverzahnung resultieren. Insbesondere kann die axiale Verzahnungskraft bei einer Schrägverzahnung des Zahnrads 27b auftreten.

Axial weiter rechts befindet sich die Festlagerung der Abtriebswelle 2, welche durch das Lager 3 sowie das zweite Gehäuselager 8 erfolgt.

Am rechtsseitigen axialen Ende der Abtriebswelle 2 befindet sich die Abtriebsschnittstelle 25, an welcher ein Kettenblattmoment C1 sowie eine Kettenkraft C2 aufgrund des Abtriebs mittels des Kettenblatts 107 wirken.

Für eine optimale Messbarkeit des Drehmoments innerhalb des Sensierbereichs 23 mittels des Drehmomentsensors 40 basierend auf dem magnetoelastischen Prinzip, wäre unter Vernachlässigung von externen störenden Magnetfeldern eine reine Belastung der Abtriebswelle 2 ausschließlich mit den Drehmomenten A1, B1 und C1 optimal. Aufgrund der zusätzlich wirkenden Kräfte, insbesondere B2, B3 und C2, treten jedoch zusätzlich Biegekräfte und Schubspannungen in der Abtriebswelle 2 auf, welche die Drehmomenterfassung mittels Sensierbereich 23 und Drehmomentsensor 40 beeinflussen und zu einem Drehmomentfehler führen können. Aufgrund der statisch bestimmten Konstruktion der Antriebsanordnung 10, wie vereinfacht in Figur 3 dargestellt, können dabei sämtliche mechanischen Einflussgrößen an der Abtriebswelle 2 vollständig modelliert werden. Basierend auf der Annahme, dass der Drehmomentfehler proportional zu den Schubspannungen in der Abtriebswelle 2 ist, kann somit der Drehmomentfehler mittels eines mathematischen Kompensationsmodells präzise abgeschätzt werden kann, wie nachfolgend beschrieben.

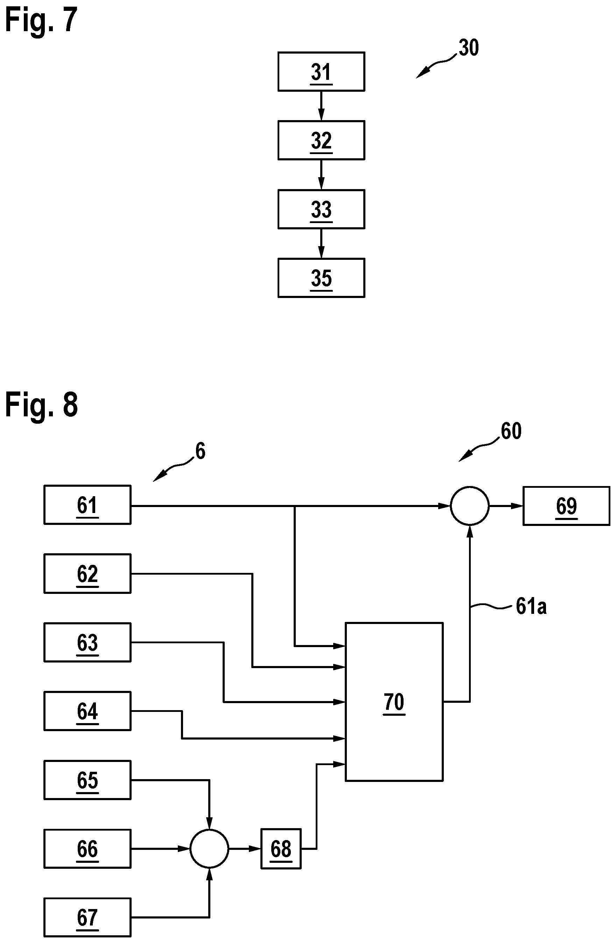

Das Verfahren 30 zum Betreiben der Antriebsanordnung 10 umfasst dabei, wie in Figur 7 stark vereinfacht schematisch dargestellt, ein Erfassen 31 eines Drehmoments an der Abtriebswelle 2 mittels des Drehmomentsensors 40, und mittels des Sensierbereichs 23.

Anschließend erfolgt ein Berechnen 32 eines Drehmomentfehlers basierend auf dem im Schritt 31 erfassten Drehmoment und basierend auf mehreren Eingangsgrößen mittels eines, insbesondere mathematischen, Kompensationsmodells.

Anschließend erfolgt ein Ermitteln 33 eines korrigierten Drehmoments basierend auf den im Schritt 31 erfassten Drehmoment und den im Schritt 32 berechneten Drehmomentfehler. Das heißt, der erfasste Drehmomentwert wird dabei durch den berechneten Drehmomentfehler korrigiert.

Das im Schritt 33 ermittelte korrigierte Drehmoment kann anschließend verwendet werden zum Erzeugen 35 eines Motormoments mittels des Motors 20. Vorzugsweise erfolgt das Erzeugen 35 des Motormoments dabei gesteuert oder geregelt, derart auf ein Soll-Motormoment, welches durch Multiplizieren des ermittelten korrigierten Drehmoments mit einem Unterstützungsfaktor bereitgestellt wird.

Eine detailliertere Beschreibung kann mittels des Signalflussdiagramms 60 in Figur 8 erfolgen, welches Eingangs- und Ausgangsgrößen des Kompensationsmodells 70 vereinfacht schematisch darstellt.

Das erfasste Drehmoment 61 ist dabei eine Eingangsgröße 6 für das Kompensationsmodell 70 und wird anschließend mit dem vom Kompensationsmodell 70 ermittelten Drehmomentfehler 61a korrigiert, wodurch das korrigierte Drehmoment 69 erhalten wird.

Weitere Eingangsgrößen 6 des Kompensationsmodells 70 sind ein Motormoment 62, welches vom Motor 20 erzeugt wird, sowie eine Kettenblatt-Größe 63, welche insbesondere in Form einer Kettenblatt-Zähnezahl verwendet wird, eine Kettenlinie 64, ein Antriebsanordnung-Montagewinkel 65, ein globaler Ketteneingriffswinkel 66, und ein Gang-abhängiger Ketteneingriffswinkel 67.

Vorzugsweise bilden die Parameter 65, 66 und 67 dabei eine vorteilhafte präzise Aufschlüsselung der verschiedenen relevanten Winkel für die verschiedenen Kräfte, welche anschließend zu einer gemeinsamen Parameter-Winkellage 68 zusammengefasst werden können.

In einer alternativ bevorzugten Ausführungsform können die Parameter 65, 66 und 67 einzeln jeweils direkt im Kompensationsmodell 70 verwendet werden.

In einer weiteren alternativ bevorzugten vereinfachten Ausführung können anstatt der separaten Parameter 65, 66, 67 ein vereinfachter einzelner Winkellage-Parameter 68 verwendet werden.

Die Eingangsgrößen 6 werden dabei teilweise erfasst, abgeschätzt und sind vorkonfiguriert, wie nachfolgend beschrieben.

Das Motormoment 62 kann sensorbasiert ermittelt werden, beispielsweise basierend auf einer Strommessung des Betätigungsstroms des Motors 20, welcher von der Steuereinheit 50 ermittelt wird.

Die Kettenblatt-Größe, insbesondere in Form der Kettenblatt-Zähnezahl ist insbesondere eine vorkonfigurierte Größe, welche beispielsweise von einem Nutzer bei einer Inbetriebnahme der Antriebsanordnung 10 definiert werden kann, und vorzugsweise gespeichert wird.

Die Kettenlinie 64 ist vorzugsweise ebenfalls eine vorkonfigurierte Größe. Insbesondere wird als Kettenlinie 64 ein axialer Abstand des Kettenblatts 107, bevorzugt von einem Kraftangriffspunkt der Kettenkraft 64b, von einer, beispielsweise vordefinierten, Mittenebene 64a der Antriebsanordnung 10 angesehen (vgl. Figur 2).

Bevorzugt kann die Kettenlinie 64 zusätzlich einen Schräglauf 108a der Fahrradkette 108 relativ zu einer radialen Richtung 25a bezüglich der Achse 25, aufweisen. Beispielsweise kann der Schräglauf 108a variieren in Abhängigkeit der Übersetzung. Insbesondere kann dabei der Schräglauf 108a basierend auf einem momentanen Gangverhältnis, welches beispielsweise sensorbasiert ermittelt und/oder abgeschätzt werden kann, abgeschätzt werden.

Der Antriebsanordnung-Montagewinkel 65 kann sensorbasiert ermittelt werden, beispielsweise mittels einer innerhalb der Antriebsanordnung 10 montierten Inertialsensorik.

Der Antriebsanordnung-Montagewinkel 65 entspricht vorzugsweise einem Winkel, der eine relative Einbaulage der Antriebsanordnung 10 bezüglich einer Rotation, beispielsweise um die Achse 25 beschreibt. Beispielhaft kann der Antriebsanordnung-Montagewinkel 65 einen Winkel zwischen einer Referenzachse 65b, welche die Achse 25 schneidet, und welche beispielsweise einer Horizontalen entspricht (wobei die in Figur 6 dargestellte Konfiguration gedreht ist) und einer Verbindungsachse 65a von Achse 25 und Motorachse 20a entsprechen.

Der globale Ketteneingriffswinkel 66 kann ebenfalls eine vorkonfigurierte Größe sein. Bevorzugt entspricht der globale Ketteneingriffswinkel 66 einem Winkel, in welchem die Kettenkraft 64b am Kettenblatt 107 verläuft relativ zu einer Horizontalen, wenn das Elektrofahrrad 107 auf einem horizontalen Untergrund steht.

Der Gang-abhängige Ketteneingriffswinkel 67 definiert vorzugsweise eine Präzisierung des globalen Ketteneingriffswinkels 66, um den Winkeleinfluss der verschieden großen Ritzel des Ritzelpakets an der Hinterradnabe 110. Der Gang-abhängige Ketteneingriffswinkel 67 kann dabei geschätzt werden basierend auf dem ermittelten momentanen Gangverhältnis.

In den Figuren dargestellt ist nur ein einziges Kettenblatt 107. In einer alternativ bevorzugten Ausführungsform können mehrere Kettenblätter 107 vorgesehen sein. Insbesondere wird in diesem Fall zusätzlich das momentane Kettenblatt 107 bei den Parametern 63, 64, 66 und 67 berücksichtigt.

Die beschriebenen Eingangsgrößen 6 werden dabei zumindest teilweise in dem Kompensationsmodell 70 verwendet, welches eine lineare Modellgleichung umfasst, mittels welcher der momentane Drehmomentfehler berechnet werden kann. Dabei erfolgt das Berechnen zusätzlich basierend auf vorbestimmten Konstanten, welche in der Modellgleichung verwendet werden, und welche basierend auf mindestens einer Muster-Antriebsanordnung, welche im Wesentlichen die gleichen geometrischen und mechanischen Eigenschaften wie die Antriebsanordnung 10 aufweist, experimentell bestimmt und angepasst wurden.

Somit kann mittels eines besonders einfach und effizient durchführbaren Verfahrens 30 eine besonders präzise Abschätzung des Drehmomentfehlers erfolgen, um das sensorbasiert erfasste Drehmoment zu korrigieren.

Weiter verbessert werden kann die Erfassung mittels des Drehmomentsensors 40 durch eine spezielle Anordnung des Drehmomentsensors 40 auf einer den Motor 20 abgewandten Seite der Abtriebswelle 2, wie in Figur 6 dargestellt. Damit kann die Abtriebswelle 2 und die Kurbelwelle 1 eine gewisse Abschirmung des Drehmomentsensors 40 gegenüber elektromagnetischen Strahlungen, die beim Betrieb des Motors 20 auftreten, bereitgestellt werden. Dadurch können insbesondere Messungen der Magnetfeldänderungen durch den Sensorbereich mittels des Drehmomentsensors 40 besonders präzise ermöglicht werden.

## Patentansprüche

1. Antriebsanordnung eines Elektrofahrrads (100), umfassend:
- eine Kurbelwelle (1),
- eine Abtriebswelle (2),
- wobei die Abtriebswelle (2) als Hohlwelle ausgebildet ist, und wobei die Kurbelwelle (1) innerhalb der Abtriebswelle (2) angeordnet ist,
- ein Lager (3), insbesondere ein Gleitlager, welches zwischen Kurbelwelle (1) und Abtriebswelle (2) angeordnet ist,
- eine Verzahnung (4), welche die Kurbelwelle (1) und die Abtriebswelle (2) drehmomentübertragend miteinander verbindet,
- wobei die Kurbelwelle (1) und die Abtriebswelle (2) ausschließlich über das Lager (3) und die Verzahnung (4) mechanisch miteinander verbunden und/oder zueinander abgestützt sind.

2. Antriebsanordnung nach Anspruch 1, wobei die Verzahnung (4) eine Steckverzahnung ist, vorzugsweise wobei die Verzahnung (4) selbstzentrierend ausgebildet ist, insbesondere als eine Kerbverzahnung.

3. Antriebsanordnung nach einem der vorhergehenden Ansprüche,
- wobei die Abtriebswelle (2) an einem ersten axialen Endbereich (21) eine Abtriebsschnittstelle (25) aufweist,
- wobei das Lager (3) näher am ersten Endbereich als die Verzahnung (4) angeordnet ist,
- insbesondere wobei das Lager (3) am ersten Endbereich (21) angeordnet ist,
- vorzugsweise wobei die Verzahnung (4) an einem dem ersten Endbereich (21) abgewandten zweiten axialen Endbereich (22) der Abtriebswelle (2) angeordnet ist.

4. Antriebsanordnung nach einem der vorhergehenden Ansprüche, wobei die Abtriebswelle (2) einen Sensierbereich (23) für eine Drehmomenterfassung aufweist, welcher axial zwischen dem Lager (3) und der Verzahnung (4) angeordnet ist.

5. Antriebsanordnung nach Anspruch 4, wobei die Abtriebswelle (2) eine Getriebeschnittstelle (27) und/oder eine Freilaufschnittstelle aufweist, wobei der Sensierbereich (23) axial zwischen der Verzahnung (4) und der Getriebeschnittstelle (27) und/oder der Freilaufschnittstelle angeordnet ist.

6. Antriebsanordnung nach einem der vorhergehenden Ansprüche, ferner umfassend ein erstes Gehäuselager (7), welches an der Kurbelwelle (1) angeordnet ist, und ein zweites Gehäuselager (8), welches an der Abtriebswelle (2) angeordnet ist, insbesondere wobei das Lager (3) radial innerhalb und/oder axial überlappend zum zweiten Gehäuselager (8) angeordnet ist, bevorzugt wobei das erste Gehäuselager (7) axial neben, insbesondere außerhalb, der Verzahnung (4) angeordnet ist.

7. Antriebsanordnung nach einem der vorhergehenden Ansprüche, ferner umfassend einen Drehmomentsensor (40), welcher eingerichtet ist zur Ermittlung eines Drehmoments basierend auf einer Verformung des Sensierbereichs (23).

8. Antriebsanordnung nach Anspruch 7, ferner umfassend einen Motor (20), wobei der Drehmomentsensor (40) auf einer dem Motor (20) abgewandten Seite der Abtriebswelle (2) angeordnet ist.

9. Verfahren zum Betreiben einer Antriebsanordnung (10), insbesondere nach einem der Ansprüche 1 bis 8, wobei die Antriebsanordnung (10) eine Kurbelwelle (1), und eine Abtriebswelle (2), und ein Lager (3) zwischen Kurbelwelle (1) und Abtriebswelle (2), und eine Verzahnung (4), welche die Kurbelwelle (1) und die Abtriebswelle (2) drehmomentübertragend miteinander verbindet, umfasst, und wobei das Verfahren (30) die Schritte umfasst:
- Erfassen (31) eines Drehmoments (61) an der Abtriebswelle (2) mittels eines Drehmomentsensors (40),
- Berechnen (32) eines Drehmomentfehlers (61a) basierend auf dem erfassten Drehmoment (61) und basierend auf zumindest einer Eingangsgröße (6) mittels eines Kompensationsmodells (70), und
- Ermitteln (33) eines korrigierten Drehmoments basierend auf dem erfassten Drehmoment (61) und dem berechneten Drehmomentfehler (61a).

10. Verfahren nach Anspruch 10, wobei die Kurbelwelle (1) und die Abtriebswelle (2) ausschließlich über das Lager (3) und die Verzahnung (4) mechanisch miteinander verbunden und/oder zueinander abgestützt sind.

11. Verfahren nach einem der Ansprüche 9 oder 10, wobei als Eingangsgrößen einer oder mehrere der folgenden Parameter verwendet werden:
- Motormoment (62),
- Kettenblatt-Größe (63), insbesondere Kettenblatt-Zähnezahl,
- Kettenlinie (64),
- Antriebsanordnung-Montagewinkel (65),
- globaler Ketteneingriffswinkel (66),
- Gang-abhängiger Ketteneingriffswinkel (67).

12. Verfahren nach Anspruch 11,
- wobei zumindest einer der folgenden Parameter sensorbasiert ermittelt wird:
- erfasstes Drehmoment (61),
- Motormoment (62),
- Antriebsanordnung-Montagewinkel (65);
und/oder
- wobei zumindest einer der folgenden Parameter, insbesondere basierend auf sensorbasiert erfassten Größen, abgeschätzt wird:
- Kettenblatt-Größe (63), insbesondere Kettenblatt-Zähnezahl,
- Kettenlinie (64),
- Gang-abhängiger Ketteneingriffswinkel (67);
und/oder
- wobei zumindest einer der folgenden Parameter vorkonfiguriert ist:
- Kettenblatt-Größe (63), insbesondere Kettenblatt-Zähnezahl,
- Kettenlinie (64),
- globaler Ketteneingriffswinkel (66).

13. Verfahren nach einem der Ansprüche 9 bis 12, wobei das Kompensationsmodell (70) die lineare Modellgleichung umfasst: $F = {X}_{1} + {X}_{2} {M}_{Motor} + {X}_{3} {M}_{Sum} \frac{1}{Z} \frac{b}{a} sin \left({α}_{E}\right) + {X}_{4} {M}_{Sum} \frac{1}{Z} \frac{b}{a} cos \left({α}_{E}\right) ,$ mit dem Drehmomentfehler F, dem Motormoment *M_{Motor}*, einem Gesamtmoment *M_{Sum}*, der Kettenblatt-Zähnezahl Z, einem axialen Abstand b des zweiten Gehäuselagers (8) und der Kettenlinie, einem axialen Lagerabstand a von Lager (3) und Verzahnung (4), dem Antriebsanordnung-Montagewinkel *α_{E}*, und den Konstanten *X*₁ und *X*₂ und *X*₃ und *X*₄.

14. Verfahren nach Anspruch 13, wobei die Konstanten *X*₁ und *X*₂ und *X*₃ und *X*₄ empirisch basierend auf mindestens einer Muster-Antriebsanordnung, vorzugsweise mittels eines Regressionsverfahrens, an die Modellgleichung angepasst sind.

15. Verfahren nach einem der Ansprüche 9 bis 14, wobei die Antriebsanordnung (10) ferner einen Motor (20) umfasst, und wobei das Verfahren (30) ferner den Schritt umfasst: Erzeugen (35) eines Motormoments mittels des Motors (20) in Abhängigkeit des ermittelten korrigierten Drehmoments.

16. Elektrofahrrad, umfassend eine Antriebsanordnung (10) nach einem der Ansprüche 1 bis 8, und/oder eingerichtet zur Durchführung des Verfahrens (30) nach einem der Ansprüche 9 bis 15.
